# EUROPÄISCHE PATENTSCHRIFT

(11) **EP 1 319 335 B1**
(45) Veröffentlichungstag und Bekanntmachung des Hinweises auf die Patenterteilung: **13.12.2006**
(21) Anmeldenummer: 02025550.1
(22) Anmeldetag: 14.11.2002
(51) Int. Cl.: A01M 29/00

(54) **Vogelschutzvorrichtung für einen transparenten Stoff und Glas mit einer Vogelschutzvorrichtung**
Bird protection device for a transparent material, and glass with a bird protection device
Dispositif de protection d'oiseau pour une matière transparente, et verre avec un dispositif de protection d'oiseau

(30) Priorität: 13.12.2001 DE 10161336
(43) Veröffentlichungstag der Anmeldung: 18.06.2003
(73) Patentinhaber: Meyerhuber, Alfred, Dr., 91710 Gunzenhausen (DE)
(72) Erfinder: Meyerhuber, Alfred, Dr., 91710 Gunzenhausen (DE)
(74) Vertreter: Beetz & Partner

(56) Entgegenhaltungen:
- EP-A- 0 531 982
- DE-A- 19 961 506
- US-A- 5 794 403

## Beschreibung

Die Erfindung betrifft eine Vogelschutzvorrichtung sowie einen transparenten Stoff mit einer Vogelschutzvorrichtung.

Es ist Vögeln kaum möglich, durchsichtige Hindernisse zu erkennen und diesen auszuweichen, da diese Hindernisse ein Nebenprodukt der Erfindungen der Neuzeit sind und Vögel sich diesen geänderten Umständen noch nicht angepaßt haben. Durch dieses Nichterkennen der Hindernisse kommt es häufig zum Vogelschlag bzw. Vogeltod und/oder zu zerbrochenen Glasscheiben.

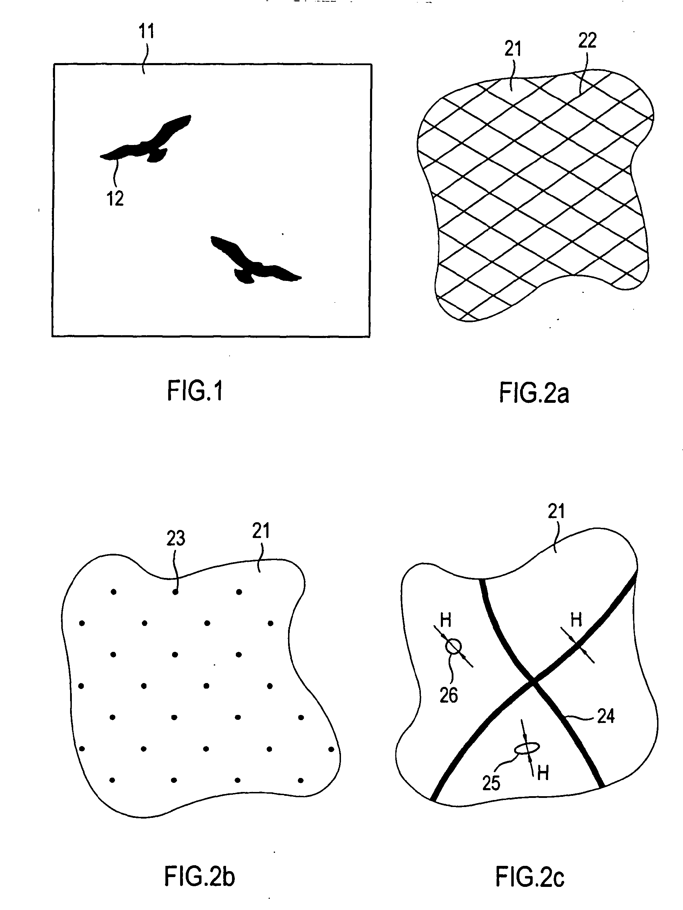

Eine Abhilfe kann hier dadurch geschaffen werden, verglaste Flächen mit optisch wahrnehmbaren Strukturen zu versehen, was oft in der Form von Raubvogelsilhouetten geschieht, um nicht nur ein erkennbares Hindernis sondern auch noch eine Gefahr darzustellen. Fig. 1 stellt dies schematisch dar. Auf einer transparenten Fläche 11 ist eine Silhouette 12 aufgeklebt. Dabei handelt es sich in der Regel um schwarze und damit undurchsichtige Folien, die von Vögeln und Menschen wahrgenommen werden. Ein Nachteil dieses Lösungsansatzes besteht darin, dass die Lichtdurchlässigkeit als wesentliche Funktion von Glasflächen sowie die Ästhetik beeinträchtigt sind.

Die EP 0531 982 A1 beschreibt eine transparente Kunststoffscheibe mit eingebetteten monofilen Kunststofffäden von 2-2,5 mm Stärke, die im Falle eines Bruches der Kunststoff-Scheibe das Entstehen und Herabfallen von losen Bruchstücken verhindert oder verringert.

Eine andere Vogelschutzvorrichtung ist aus DE 199 61 506 A 1 bekannt. Dort wird auf dem Glas ein transparenter Stoff aufgebracht, der, wegen der UV-Sichtigkeit von Vögeln, für Vögel besser sichtbar ist als für Menschen.

Die US 5794403 beschreibt eine feuerfeste transparente Fensterscheibe. Sie ist aus Glas- und Plastikscheiben zusammengesetzt. Es können dunkle Plastikfäden eingegossen sein, deren Dicke zwischen 0,9 und 5 mm liegt.

Ferner ist ein Sicherheitsglas bekannt, in das feine elektrisch verbundene Metalldrähte eingearbeitet sind. Dies dient aber der Bruchdetektion anhand der Auswertung der elektrischen Werte (Widerstand) der eingearbeiteten Drähte.

Aufgabe der Erfindung ist es, eine Vogelschutzvorrichtung für einen transparenten Stoff zu schaffen, die die Lichtdurchlässigkeit des transparenten Stoffes weniger beeinflusst, indem sie das bessere Auflösungsvermögen der Sichtigkeit von Vogelarten ausnützt, und dadurch ästhetisch neutraler ist und eine höhere Wirksamkeit erreicht.

Diese Aufgabe wird mit den Merkmalen des unabhängigen Anspruchs 1 gelöst. Abhängige Ansprüche sind auf bevorzugte Ausführungsformen der Erfindung gerichtet.

Die erfindungsgemäße Vogelschutzvorrichtung für einen transparenten Stoff ist oder weist eine optisch wirksame Struktur auf, die dann, wenn sie beim oder im transparenten Stoff vorhanden ist, aufgrund eines höheren Auflösungsvermögens der Sichtigkeit mindestens einer Vogelart für diese Vogelart optisch besser erkennbar ist als für einen Menschen. Diese Struktur ist so fein ausgebildet, dass sie nicht oder kaum für einen Menschen optisch wahrnehmbar ist.

Eine Vogelschutzvorrichtung für einen transparenten Stoff ist dadurch gekennzeichnet, dass sie beim oder im transparenten Stoff eine optisch wirksame Struktur ist oder aufweist, deren eine Hauptabmessung kleiner als 0,5 mm, vorzugsweise kleiner 0,1 mm, weiter vorzugsweise kleiner 0,05 mm ist.

Bei linienartigen Strukturen ist die Breite der Linie und bei elliptischen Strukturen der kleinsten Durchmesser die oben genannte Hauptabmessung.

Die optisch wirksame Struktur kann einen anderen Brechungsindex und/oder eine andere Lichtdurchlässigkeit als der transparente Stoff aufweisen.

Die Vorrichtung kann durch mechanische, physikalische und/oder chemische Behandlung des transparenten Stoffes und/oder der Vorrichtung beim oder im transparenten Stoff eingebracht und/oder aufgebracht werden kann. Sie kann durch Einfräsen und/oder Einbrennen und/oder chemisches Ätzen und/oder Aufdrucken geschehen.

Die optisch wirksame Struktur kann ein regelmäßiges und/oder zufallsgeneriertes und/oder unregelmäßiges und/oder amorphes Muster sein oder aufweisen. Ferner kann sie Glas und/oder Kunststoff und/oder Metall, das elektrisch nicht angeschlossen ist, sein oder aufweisen.

Die Vorrichtung kann zusätzlich eine Einrichtung oder Beimengung sein oder aufweisen, die dann, wenn sie beim oder im transparenten Stoff vorhanden ist, in einem Wellenbereich, der an den für Menschen sichtbaren Wellenlängenbereich angrenzt, ein höheres Absorptions- und/oder Reflexionsvermögen hat als im sichtbaren Bereich.

Auch kann die Vorrichtung dadurch gekennzeichnet sein, dass sie zusätzlich eine Einrichtung oder Beimengung ist oder aufweist, die dann, wenn sie beim oder im transparenten Stoff vorhanden ist, für zumindest eine Vogelart optisch wahrnehmbar, für Menschen dagegen optisch nicht oder kaum wahrnehmbar ist.

Der transparente Stoff für die Vogelschutzvorrichtung ist Glas oder Kunststoff. Dieser transparente Stoff ist entweder als Flachglas ausgebildet, wobei die Vogelschutzvorrichtung auf mindestens einer Oberfläche des Flachglases ausgebildet oder angebracht sein kann, oder als mehrlagige Glasscheibe, wo die Vogelschutzvorrichtung dann zwischen mindestens zwei Lagen vorgesehen sein kann.

Es sind auch Kombinationen der verschiedenen Merkmale der Vogelschutzeinrichtung hinsichtlich der Ausführung und/oder Anbringung möglich.

Bezugnehmend auf die Zeichnungen werden nachfolgend einzelne Ausführungsformen der Erfindung beschrieben, es zeigen:
Fig. 1 eine bekannte Vogelschutzvorrichtung,
Fig. 2 verschiedene Ausführungsformen der optisch wirksamen Struktur,
Fig. 3 verschiedene Ausführungsformen von Gläsern mit der Vogelschutzvorrichtung und
Fig. 4 ein Absorptionsspektrum einer erfindungsgemäßen Vogelschutzvorrichtung.

Die Erfindung nutzt die Tatsache, dass viele Vögel ein höheres Auflösungsvermögen der Sichtigkeit haben und dadurch bei gegebenem Abstand feine Strukturen optisch wahrnehmen können, die ein Menschen kaum oder nicht mehr optisch wahrnehmen kann. Viele Vögel besitzen außerdem einen anderen und insbesondere weiteren Wellenlängenbereich, den sie wahrnehmen können. Dieser Wellenlängenbereich ist für einen Menschen kaum oder nicht mehr optisch wahrnehmbar. Eine Glasscheibe, die dementsprechend präpariert ist, wird damit für Vögel anders als durchsichtig erscheinen und damit als Hindernis erkennbar sein.

Die Fig. 2 zeigt verschiedene Ausführungsformen der Struktur der Vogelschutzvorrichtung.

Fig. 2a zeigt schematisch eine Glasscheibe 21, in die eine Gitterstruktur 22 eingebracht wurde. Die Gitterstruktur 22 kann aus Glas, Kunststoff oder Metall bestehen oder eine Kombination dieser Materialien aufweisen. Die Gitterstruktur 22 hat optische wirksame Eigenschaften dahingehend, dass sie für mindestens eine Vogelart optisch besser wahrnehmbar ist als für einen Menschen.

Fig. 2b zeigt eine Glasscheibe 21, in die eine regelmäßige Struktur 23 eingebracht wurde. Diese Struktur 23 kann durch mechanische, physikalische und/oder chemische Behandlung der Glasscheibe 21 eingebracht oder aufgebracht werden.

Fig. 2c zeigt schematisch eine Glasscheibe 21 auf die eine linienartige Struktur 24, eine elliptische Struktur 25 und als Sonderfall der elliptischen Struktur eine kreisförmige Struktur 26 aufgebracht wurden. Die mit H bezeichnete Hauptabmessung definiert dabei den kleinsten Abstand zweier Ränder einer Struktur zueinander, also beispielsweise die Linienbreite oder den kleinsten Durchmesser einer Ellipse oder den Durchmesser eines Kreises.

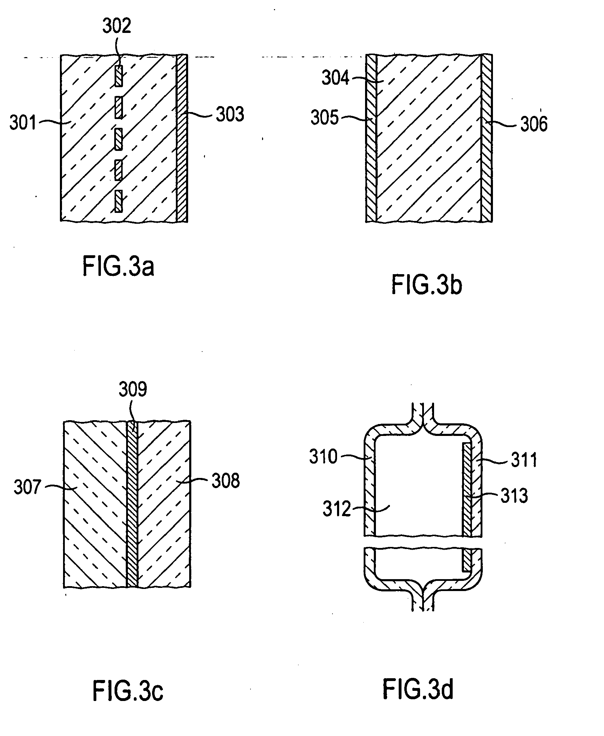

Die Fig. 3 zeigt verschiedene Ausführungsformen, bei denen die Vogelschutzvorrichtung am bzw. im Glas vorgesehen ist. Dabei können die Merkmale der Vogelschutzvorrichtung einzeln oder in Kombination aufgebracht und/oder eingebracht werden. Die Vogelschutzvorrichtung hat optische wirksame Eigenschaften dahingehend, dass sie für zumindest eine Vogelart optisch besser wahrgenommen werden kann als für einen Menschen. Für einen Menschen erscheint die Vorrichtung weitgehend transparent, so dass auch die mit ihr präparierte Glasscheibe im wesentlichen transparent erscheint.

Fig. 3a zeigt im Schnitt durch eine Glasscheibe eine Ausführungsform, bei der die Vogelschutzvorrichtung 302 in die Glasscheibe 301 eingebracht wurde. Die Vorrichtung 302 kann aus Glas, Kunststoff oder Metall sein oder diese Materialien in Kombination aufweisen. Eine andere Ausführungsform der Vogelschutzvorrichtung 303 kann auf der Glasscheibe 301 aufgebracht sein.

Fig. 3b zeigt abermals als Schnitt eine Ausführungsform, bei der zwei Vogelschutzvorrichtungen 305, 306 auf eine Glasscheibe 304 aufgebracht sind. Die Vogelschutzvorrichtungen 305, 306 können gleiche oder verschiedene Ausführungsformen, wie z.B. eine Vorrichtung die aufgrund der besseren UV-Sichtigkeit und eine Vorrichtung die aufgrund des besseren Auflösungsvermögens mindestens einer Vogelart erkennbar ist, sein.

Fig. 3c zeigt geschnitten ein Verbundglas, das eine erste Lage 307 und eine zweite Lage 308 aufweist. Zwischen den Lagen ist eine Vogelschutzvorrichtung 309 vorgesehen. Es kann sich dabei um eine Struktur oder Folie oder Bedampfung oder um ein Gitter aus Metall, Glasfaser, Kunststoff oder auch um eine bestimmte Behandlung der Oberfläche einer der Lagen 307, 308 oder des dazwischen eingebrachten Materials handeln.

Fig. 3d zeigt im Schnitt Isolierglas mit zwei Glasscheiben 310, 311 und einem mehr oder minder stark evakuierten Raum 312 zwischen ihnen. Auf der Innenseite mindestens einer der Glasscheiben kann die Vogelschutzvorrichtung 313 vorgesehen sein, auch hier wieder beispielsweise als Gitter oder als Beschichtung. Eine Beschichtung kann beispielsweise durch Aufdampfen oder Abscheidung aufgebracht werden. Es können allgemein auch fotografische oder fotolithografische Verfahren verwendet werden.

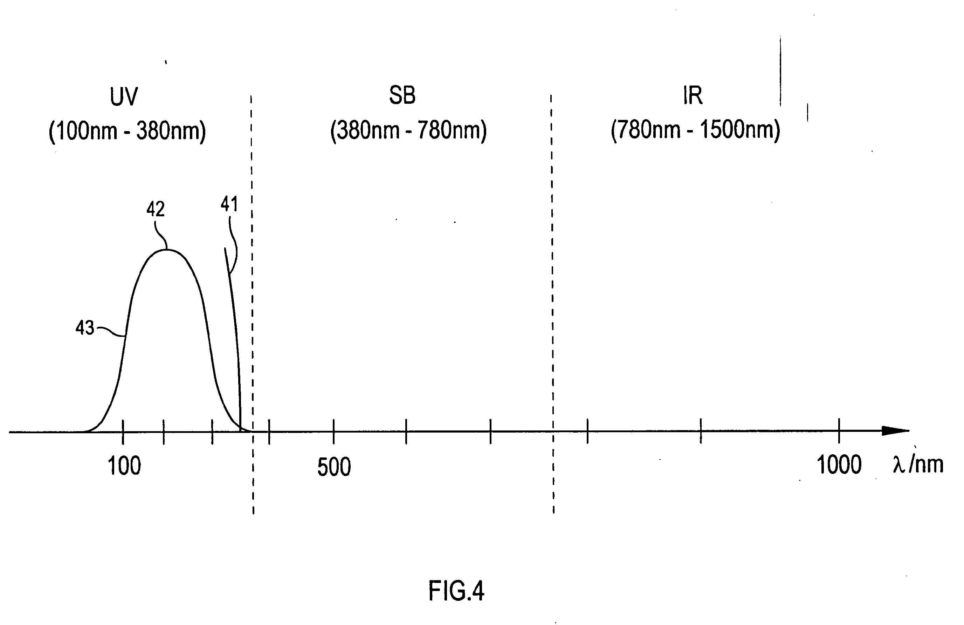

Fig. 4 zeigt schematisch eine Eigenschaft einer erfindungsgemäßen Vogelschutzvorrichtung. Dargestellt ist das Absorptionsverhalten der Vogelschutzvorrichtung im angewandten Zustand. Die Wellenlänge ist auf einer logarithmischen Skala dargestellt. Der sichtbare Bereich SB liegt etwa zwischen 400 und 800 nm. Darüber liegt der Infrarotbereich (IR), darunter ultraviolette Bereich (UV). Die Vogelschutzvorrichtung kann eine Absorptionslinie 41 oder ein Absorptionsmaximum (Maximum 42 der Kurve 43) im Wellenlängenbereich zwischen 50 und 450 nm haben. Solche Absorptionsbereiche schwächen den Durchtritt von Licht im entsprechenden Wellenlängenbereich, so dass die so behandelte Glasscheibe für Vögel dunkler erscheint und damit sichtbar wird. Vorzugsweise liegt die Absorptionslinie und/oder das Absorptionsmaximum im Wellenlängenbereich zwischen 420 und 200 nm, weiter vorzugsweise zwischen 420 und 360 nm.

Die Vogelschutzvorrichtung kann auch mehrere Absorptionslinien 41 oder Absorptionsmaxima 42 wie oben angegeben haben, wobei diese dann auf unterschiedlichen Wellenlängen in den obengenannten Bereichen liegen können. Soweit sinnvoll, können Absorptionslinien oder Absorptionsmaxima auch im Infrarotbereich liegen, dort z.B. im Wellenlängenbereich zwischen 750 und 3000 nm, vorzugsweise zwischen 780 und 1500 nm.

Die erweiterte Sichtigkeit von Vögeln hinsichtlich des Auflösungsvermögens und der Wellenlänge kann auch durch eine Kombination dieser beiden Merkmale nutzbar gemacht werden. Dabei können dann eine optisch wirksame Struktur einerseits und ein Stoff mit den genannten optischen Eigenschaften andererseits auf einer Glasscheibe aufgebracht und/oder eingebracht werden.

Die Vogelschutzvorrichtung kann flächig oder einem bestimmten Muster folgend auf dem transparenten Stoff aufgebracht sein. Sofern ein Muster vorgesehen ist, kann es abermals die Silhouette eines Raubvogels sein. Es kann sich auch um andere Muster handeln, beispielsweise um Streifen, Gitter, Punkte oder ähnliches. Bei solchen Ausführungsformen wären dann diese Muster für zumindest eine Vogelart optisch besser wahrnehmbar als für einen Menschen. Insbesondere wären sie für Menschen nicht oder kaum wahrnehmbar.

Sofern von der Wahrnehmbarkeit durch Vögel oder Menschen gesprochen wird, kann auf Durchschnittswerte abgehoben werden. Sofern eine Vogelschutzvorrichtung als optisch nicht wahrnehmbar beschrieben ist, kann damit eine Intensitätsminderung im sichtbaren Bereich von weniger als 5%, vorzugsweise weniger als 1% gemeint sein. Sofern von einer kaum wahrnehmbaren Vogelschutzvorrichtung die Rede ist, kann damit eine Intensitätsminderung im sichtbaren Bereich von weniger als 20%, vorzugsweise weniger als 10% gemeint sein. Der sichtbare Bereich kann hier als von 400 nm bis 800 nm reichend angesehen werden.

Vorzugsweise werden bei der Betrachtung von Absorptions- und Reflexionsvermögen Relativwerte (z.B. %, dB) herangezogen.

Soweit die Vogelschutzvorrichtung eine Folie aufweist, kann diese als Klebefolie ausgelegt sein. Sie kann nur in Teilbereichen die genannten optisch wirksamen Strukturen und/oder optischen Eigenschaften (für zumindest eine Vogelart optisch besser wahrnehmbar als für einen Menschen) haben, oder die Folie selbst kann entsprechend gewünschten Mustern geschnitten sein.

In einer bevorzugten Ausführungsform der Erfindung kann die Vorrichtung mehrere parallel zueinander verlaufende optisch wirksame Strukturen mit einem Abstand zueinander von kleiner 10 cm, vorzugsweise kleiner 3 cm, vorzugsweise kleiner 1 cm, weiter vorzugsweise kleiner 1 mm, weiter vorzugsweise kleiner 0,5 mm aufweisen.

In einer anderen Ausführungsform können sich erste parallel zueinander verlaufende optisch wirksame Strukturen, mit den oben genannten Abstand, mit zweiten parallel zueinander verlaufenden optischen Strukturen, mit oben genannten Abstand, vorzugsweise in einem rechten Winkel kreuzen.

Die Hauptabmessung der optische wirksamen Struktur kann dabei wie oben erwähnt sein.

## Patentansprüche

1. Vogelschutzvorrichtung für einen transparenten Stoff (21, 301, 304, 307, 308, 310, 311), **dadurch gekennzeichnet, dass** sie beim oder im transparenten Stoff eine optisch wirksame Stru k-tur (22 - 26, 302) ist oder aufweist, deren eine Hauptabmessung (H) kleiner 0,5 mm ist.

2. Vogelschutzvorrichtung nach Anspruch 1, **dadurch gekennzeichnet, dass** bei linienartigen Strukturen (24) ihre Hauptabmessung die Breite der Linie ist.

3. Vogelschutzvorrichtung nach Anspruch 1, **dadurch gekennzeichnet, dass** bei elliptischen Strukturen (25, 26) ihre Hauptabmessung der kleinsten Durchmesser ist.

4. Vogelschutzvorrichtung nach Anspruch 1 bis 3, **dadurch gekennzeichnet, dass** die optisch wirksame Struktur (22 - 26, 302) einen anderen Brechungsindex und/oder andere Lichtdurchlässigkeit als der transparente Stoff (21, 301, 304, 307, 308, 310, 311) aufweist.

5. Vogelschutzvorrichtung nach Anspruch 1 bis 4, **dadurch gekennzeichnet, dass** die Vogelschutzvorrichtung durch mechanische, physikalische und/oder chemische Behandlung des transparenten Stoffes (21, 301, 304, 307, 308, 310, 311) und/oder der Vogelschutzvorrichtung beim oder im transparenten Stoff eingebracht und/oder aufgebracht werden kann.

6. Vogelschutzvorrichtung nach Anspruch 1 bis 5, **dadurch gekennzeichnet, dass** die optisch wirksame Struktur (22 - 26, 302) elektrisch nicht leitend ist.

7. Vogelschutzvorrichtung nach Anspruch 1 bis 6, **dadurch gekennzeichnet, dass** die optisch wirksame Struktur (22 - 26, 302) ein regelmäßiges und/oder zufallsgeneriertes und/oder unregelmäßiges und/oder amorphes Muster ist oder aufweist.

8. Vogelschutzvorrichtung nach einem oder mehreren der Ansprüche 1 bis 7, **dadurch gekennzeichnet, dass** die optisch wirksame Struktur (22 - 26, 302) Glas ist oder aufweist.

9. Vogelschutzvorrichtung nach einem oder mehreren der Ansprüche 1 bis 7, **dadurch gekennzeichnet, dass** die optisch wirksame Struktur (22 - 26, 302) Kunststoff ist oder aufweist.

10. Vogelschutzvorrichtung nach einem oder mehreren der Ansprüche 1 bis 7, **dadurch gekennzeichnet, dass** die optisch wirksame Struktur (22 - 26, 302) Metall ist, das elektrisch nicht angeschlossen ist.

11. Vogelschutzvorrichtung nach Anspruch 1 bis 10, **dadurch gekennzeichnet, dass** sie zusätzlich eine Einrichtung oder Beimengung ist oder aufweist, die dann, wenn sie beim oder im transparenten Stoff (21, 301, 304, 307, 308, 310, 311) vorhanden ist, in einem Wellenbereich, der an den für Menschen sichtbaren Wellenlängenbereich angrenzt, ein höheres Absorptions- und/oder Reflexionsvermögen hat als im sichtbaren Bereich.

12. Vogelschutzvorrichtung nach Anspruch 1 bis 11, **dadurch gekennzeichnet, dass** sie zusätzlich eine Einrichtung oder Beimengung ist oder aufweist, die dann, wenn sie beim oder im transparenten Stoff (21, 301, 304, 307, 308, 310, 311) vorhanden ist, für zumindest eine Vogelart optisch wahrnehmbar, für Menschen dagegen optisch nicht oder kaum wahrnehmbar ist.

13. Vogelschutzvorrichtung nach einem oder mehreren der Ansprüche 1 bis 12, **dadurch gekennzeichnet, dass** der transparente Stoff (21, 301, 304, 307, 308, 310, 311) Glas ist.

14. Vogelschutzvorrichtung nach einem oder mehreren der Ansprüche 1 bis 12, **dadurch gekennzeichnet, dass** der transparente Stoff (21, 301, 304, 307, 308, 310, 311) Kunststoff ist.

15. Vogelschutzvorrichtung nach einem oder mehreren der Ansprüche 1 bis 14, **dadurch gekennzeichnet, dass** die Vorrichtung mehrere parallel zueinander verlaufende optisch wirksame Strukturen (24) mit einem Abstand zueinander von kleiner 10 cm, vorzugsweise kleiner 3 cm, vorzugsweise kleiner 1 cm, weiter vorzugsweise kleiner 1 mm, weiter vorzugsweise kleiner 0,5 mm aufweist.

16. Vogelschutzvorrichtung nach einem oder mehreren der Ansprüche 1 bis 15, **dadurch gekennzeichnet, dass** die Vorrichtung erste parallel zueinander verlaufende optisch wirksame Strukturen (24), mit den oben genannten Abstand, und zweite parallel zueinander verlaufende optische Strukturen (24), mit oben genannten Abstand, aufweist, die sich vorzugsweise in einem rechten Winkel kreuzen.

17. Glas oder Kunststoff mit einer Vogelschutzvorrichtung nach einem oder mehreren der vorherigen Ansprüche.

18. Glas oder Kunststoff nach Anspruch 17, das als Flachglas ausgebildet ist, **dadurch gekennzeichnet, dass** mindestens eine Vogelschutzvorrichtung nach Anspruch 1 bis 14 auf mindestens einer Oberfläche des Flachglases ausgebildet oder angebracht ist.

19. Glas oder Kunststoff nach Anspruch 17 oder 18, bei dem es sich um eine mehrlagige Glasscheibe (310, 311), insbesondere um Verbundglas handelt, **dadurch gekennzeichnet, dass** die Vogelschutzvorrichtung nach Anspruch 1 bis 16 zwischen mindestens zwei Lagen vorgesehen ist.

## Claims

1. Bird protection means for a transparent substance (21, 301, 304, 307, 308, 310, 311), **characterized in that** it comprises at or in the substance an optically effective structure (22-26, 302) with a main dimension (H) smaller than 0,5 mm.

2. Bird protection means of claim 1, **characterized in that** in a line-like structure (24), the main dimension is the width of the line.

3. Bird protection means of claim 1, **characterized in that** in elliptic structures (25, 26) the main dimension is the smallest diameter.

4. Bird protection means of one of the claims 1 to 3, **characterized in that** the optically effective structure (22-26, 302) has another refractive index and/or another light transmissivity as the transparent substance (21, 301, 304, 307, 308, 310, 311).

5. Bird protection means of one of the claims 1 to 4, **characterized in that** it may be provided into and/or onto the transparent substance (21, 301, 304, 307, 308, 310, 311) through mechanical, physical and/or chemical treatment of the transparent substance and/or the bird protection means.

6. Bird protection means of claims 1 to 5, **characterized in that** the optically effective structure (22-26, 302) is electrically non-conductive.

7. Bird protection means of claims 1 to 6, **characterized in that** the optically effective structure (22-26, 302) is or comprises a regular and/or random-generated and/or irregular and/or amorphous pattern.

8. Bird protection means of one of the claims 1 to 7, **characterized in that** the optically effective structure (22-26, 302) is or comprises glass.

9. Bird protection means of one of the claims 1 to 7, **characterized in that** the optically effective structure (22-26, 302) is or comprises plastic.

10. Bird protection means of one of the claims 1 to 7, **characterized in that** the optically effective structure (22-26, 302) is metal which is electrically not connected.

11. Bird protection means of claims 1 to 10, **characterized in that** it is or comprises in addition a means or mixing component which, when provided at or in the transparent substance (21, 301, 304, 307, 308, 310, 311) has in a wavelength region adjacent to a wavelength region visible for humans a higher absorption and/or reflection property than in the visible region.

12. Bird protection means of claims 1 to 11, **characterized in that** it is or comprises in addition a means or component which, when provided at or in the transparent substance (21, 301, 304, 307, 308, 310, 311) is optically recognizable for at least one bird species, but not or hardly recognizable for humans.

13. Bird protection means of one or more of the claims 1 to 12, **characterized in that** the transparent substance (21, 301, 304, 307, 308, 310, 311) is glass.

14. Bird protection means of one or more of the claims 1 to 12, **characterized in that** the transparent substance (21, 301, 304, 307, 308, 310, 311) is plastics.

15. Bird protection means of one of the claims 1 to 14, **characterized in that** it comprises a plurality of parallel optically effective structures (24) with a distance to each other of smaller than 10 cm, preferably smaller than 3 cm, further preferably smaller than 1 cm, further preferably smaller than 1 mm, further preferably smaller than 0,5 mm.

16. Bird protection means of one or more of the claims 1 to 15, **characterized in that** it comprises first parallel optically effective structures (24) having the above-mentioned distances, and second parallel optical structures (24) having the above distance which intersect mutually under a 90° angle.

17. Glass or plastics having bird protection means of one or more of the preceding claims.

18. Glass or plastics of claim 17, formed as sheet glass, **characterized in that** at least one bird protection means of claim 1 to 14 is provided or formed on at least one surface of the sheet glass.

19. Glass or plastics of claim 17 or 18, being a multilayer glass sheet, particularly compound glass, **characterized in that** the bird protection means of claim 1 to 16 is provided between two layers.

## Revendications

1. Dispositif de protection contre les oiseaux pour une matière transparente (21, 301, 304, 307, 308, 310, 311), **caractérisé en ce qu'**il est ou comporte une structure optique efficace (22 à 26, 302) sur ou dans la matière transparente, dont une première dimension principale (H) est inférieure à 0,5 mm.

2. Dispositif de protection contre les oiseaux selon la revendication 1, **caractérisé en ce que** pour des structures linéaires (24), sa dimension principale est la largeur de la ligne.

3. Dispositif de protection contre les oiseaux selon la revendication 1, **caractérisé en ce que** pour des structures elliptiques (25, 26), sa dimension principale est le diamètre minimal.

4. Dispositif de protection contre les oiseaux selon les revendications 1 à 3, **caractérisé en ce que** la structure optique efficace (22 à 26, 302) présente un autre indice de réfraction et/ou une autre perméabilité à la lumière que la matière transparente (21, 301, 304,307,308,310,311).

5. Dispositif de protection contre les oiseaux selon les revendications 1 à 4, **caractérisé en ce que** le dispositif de protection contre les oiseaux peut être incorporé et/ou appliqué dans ou sur la matière transparente par traitement mécanique, physique et/ou chimique de la matière transparente (21, 301, 304, 307, 308, 310, 311) et/ou du dispositif de protection contre les oiseaux.

6. Dispositif de protection contre les oiseaux selon les revendications 1 à 5, **caractérisé en ce que** la structure optique efficace (22 à 26, 302) n'est pas électroconductrice.

7. Dispositif de protection contre les oiseaux selon les revendications 1 à 6, **caractérisé en ce que** la structure optique efficace (22 à 26, 302) est ou comporte un motif régulier et/ou variable et/ou irrégulier et/ou amorphe.

8. Dispositif de protection contre les oiseaux selon l'une ou plusieurs des revendications 1 à 7, **caractérisé en ce que** la structure optique efficace (22 à 26, 302) est ou comporte du verre.

9. Dispositif de protection contre les oiseaux selon l'une ou plusieurs des revendications 1 à 7, **caractérisé en ce que** la structure optique efficace (22 à 26, 302) est ou comporte une matière plastique.

10. Dispositif de protection contre les oiseaux selon l'une ou plusieurs des revendications 1 à 7, **caractérisé en ce que** la structure optique efficace (22 à 26, 302) est un métal électriquement non connecté.

11. Dispositif de protection contre les oiseaux selon les revendications 1 à 10, **caractérisé en ce qu'**il est ou comporte en outre un dispositif ou un auxiliaire ayant un pouvoir d'absorption et/ou de réflexion supérieur à celui de la plage visible quand il est présent sur ou dans la matière transparente (21, 301, 304, 307, 308, 310, 311), dans une plage de longueurs d'ondes contiguë à la plage de longueur d'ondes visible pour l'être humain.

12. Dispositif de protection contre les oiseaux selon les revendications 1 à 11, **caractérisé en ce qu'**il est ou comporte en outre un dispositif ou un auxiliaire optiquement perceptible par une espèce d'oiseaux au moins quand il est présent sur ou dans la matière transparente (21, 301, 304, 307, 308, 310, 311), alors qu'il n'est que faiblement, voire pas du tout optiquement perceptible par l'homme.

13. Dispositif de protection contre les oiseaux selon l'une ou plusieurs des revendications 1 à 12, **caractérisé en ce que** la matière transparente (21, 301, 304, 307, 308, 310, 311) est du verre.

14. Dispositif de protection contre les oiseaux selon l'une ou plusieurs des revendications 1 à 12, **caractérisé en ce que** la matière transparente (21, 301, 304, 307, 308, 310, 311) est une matière plastique.

15. Dispositif de protection contre les oiseaux selon l'une ou plusieurs des revendications 1 à 14, **caractérisé en ce que** le dispositif comporte plusieurs structures (24) optiques efficaces s'étendant parallèlement avec un intervalle entre elles inférieur à 10 cm, de préférence inférieur à 3 cm, de préférence inférieur à 1 cm, notamment préférentiellement inférieur à 1 mm et notamment préférentiellement inférieur à 0,5 mm.

16. Dispositif de protection contre les oiseaux selon l'une ou plusieurs des revendications 1 à 15, **caractérisé en ce que** le dispositif est composé de premières structures (24) optiques efficaces s'étendant parallèlement entre elles avec l'intervalle susmentionné, et de deuxièmes structures (24) optiques efficaces s'étendant parallèlement entre elles avec l'intervalle susmentionné, qui se croisent de préférence à angle droit.

17. Verre ou matière plastique avec un dispositif de protection contre les oiseaux selon l'une ou plusieurs des revendications précédentes.

18. Verre ou matière plastique selon la revendication 17, formés en tant que verre plat, **caractérisés en ce qu'**au moins un dispositif de protection contre les oiseaux selon les revendications 1 à 14 est formé ou appliqué sur au moins une surface du verre plat.

19. Verre ou matière plastique selon la revendication 17 ou 18, se présentant comme une vitre à plusieurs strates (310, 311), en particulier en verre feuilleté, **caractérisés en ce que** le dispositif de protection contre les oiseaux selon les revendications 1 à 16 est prévu entre au moins deux strates.
